# FASCICULE DE BREVET EUROPEEN

(11) **EP 2 212 130 B1**
(45) Date de publication et mention de la délivrance du brevet: **15.05.2013**
(21) Numéro de dépôt: 08854743.5
(22) Date de dépôt: 05.11.2008
(51) Int. Cl.: B60G 13/00, B60G 15/07, B60G 3/22

(54) **TRAIN ARRIERE DE VEHICULE AUTOMOBILE**
RÜCKSTRUKTUR FÜR EIN KRAFTFAHRZEUG
REAR END OF MOTOR VEHICLE

(30) Priorité: 12.11.2007 FR 0707907
(43) Date de publication de la demande: 04.08.2010
(73) Titulaire: Renault S.A.S., 92100 Boulogne-Billancourt (FR)
(72) Inventeur: EJARQUE, Pascal, F-78340 Les Clayes sous Bois (FR)
(86) Numéro de dépôt international: PCT/FR2008/051995
(87) Numéro de publication internationale: WO 2009/068782

(56) Documents cités:
- EP-A- 0 899 133
- DE-A1- 4 120 894
- US-A- 4 934 733

## Description

L'invention concerne un véhicule présentant une implantation particulière de suspension arrière et suspension arrière correspondante.

L'invention concerne plus particulièrement une suspension comprenant de chaque côté un bras longitudinal dont l'extrémité avant est fixée de façon articulée sous le plancher du véhicule, ce bras longitudinal portant un essieu de roue et un ensemble amortisseur et ressort de suspension qui prend appui sous une surface fixe du véhicule, un bras transversal dont une extrémité est fixée de façon articulée sous le plancher du véhicule et dont l'autre extrémité est reliée de façon articulée au bras longitudinal.

Généralement l'ensemble amortisseur et ressort de suspension est appelé jambe de force et est implanté dans le passage de roue.

De ce fait, ce passage de roue est conçu structurellement pour absorber les efforts.

Il en résulte non seulement des coûts de fabrication élevés mais également une réduction de la largeur disponible à l'intérieur du véhicule.

Dans le cas des véhicules utilitaires, en raison des charges importantes à transporter, l'ensemble amortisseur et ressort de suspension est relativement encombrant, de sorte que le passage de roue doit être renforcé en conséquence.

De ce fait, le niveau du plancher et le seuil de chargement sont relativement hauts.

Il est connu, par le document US 4,934,733, une suspension pour train arrière d'un véhicule comportant deux bras longitudinaux portant chacun un essieu de roue et où l'ensemble de suspension est disposé à l'arrière de chaque roue, les bras étant toutefois inclinés vers l'avant du véhicule et articulés en partie basse du véhicule, le train arrière comportant également un bras transversal de renfort de la structure du plancher disposé au niveau de l'axe de la roue. Toutefois, dans le cas où l'articulation des bras est disposée au niveau du plancher du véhicule, une telle solution oblige à rehausser le niveau du plancher, ce qui réduit la place disponible à l'intérieur du véhicule, notamment au niveau du coffre.

Le but de la présente invention est de remédier aux inconvénients ci-dessus.

Ce but est atteint selon l'invention, grâce au fait que :
- l'extrémité avant du bras longitudinal (1) est fixée de façon articulée sous le plancher (2) du véhicule,
- l'ensemble amortisseur (4) et ressort de suspension (5) est disposé sensiblement verticalement à l'arrière du passage de roue (8) dans lequel fait saillie l'essieu de roue (3) porté par le bras longitudinal (1),
- le bras longitudinal (1) est incliné vers le bas entre son articulation avant et son articulation arrière,
- l'extrémité inférieure de l'amortisseur (4) et ladite autre extrémité du bras transversal (7) sont reliées de façon articulée à l'extrémité arrière du bras longitudinal (1).

Ainsi l'ensemble amortisseur ressort de suspension n'est pas situé dans le passage de roue, mais à l'arrière de celui-ci dans un emplacement où l'ensemble précité profite de la rigidité et de la faible inertie de parois constituant la carrosserie du véhicule. De ce fait, l'espace disponible à l'intérieur du véhicule peut être augmenté et le niveau du plancher peut être abaissé, ce qui est appréciable dans le cas d'un véhicule utilitaire.

Selon une version préférée du véhicule selon l'invention, l'ensemble amortisseur et ressort de suspension est disposé dans un logement situé dans l'un des deux coins arrière de la carrosserie du véhicule.

De préférence, ledit logement comporte à sa partie supérieure une paroi qui est reliée d'une part au panneau de la carrosserie définissant ledit coin arrière et d'autre part à deux parois verticales reliées au panneau.

Ainsi, le logement profite de la rigidité des parois de la carrosserie du véhicule.

Selon d'autres caractéristiques avantageuses de la suspension selon l'invention :
- l'articulation entre l'extrémité arrière du bras longitudinal, l'amortisseur et le bras transversal est située en dessous de l'axe de l'essieu de roue,
- l'axe de l'essieu de roue est situé au-dessus du bras longitudinal.

Les caractéristiques ci-dessus permettent d'abaisser le niveau du plancher et le seuil de chargement du véhicule.

De préférence, la partie arrière du bras longitudinal comporte un coude dirigé vers l'extérieur du véhicule.

Ce coude permet de décaler vers l'extérieur, l'articulation du bras longitudinal, du bras transversal et de l'amortisseur, ce qui permet d'augmenter la largeur de l'espace disponible à l'intérieur du véhicule.

Selon une autre particularité avantageuse de l'invention, le bras longitudinal comporte une partie coudée située entre son extrémité avant et son extrémité arrière dont la convexité est dirigée vers l'extérieur, cette partie coudée supportant l'essieu de roue.

Enfin, l'invention concerne un véhicule automobile comprenant une suspension selon l'invention.

D'autres particularités et avantages de l'invention apparaîtront encore tout au long de la description ci-après.

L'invention est maintenant décrite en référence aux dessins annexés, non limitatifs, dans lesquels :
- la figure 1 est une vue en perspective d'une suspension arrière d'un véhicule selon l'invention,
- la figure 2 est une vue en plan de dessus de la suspension implantée à l'arrière d'un véhicule,
- la figure 3 est une vue de l'arrière de la suspension implantée dans le véhicule,
- la figure 4 est une vue latérale de la suspension implantée dans le véhicule.

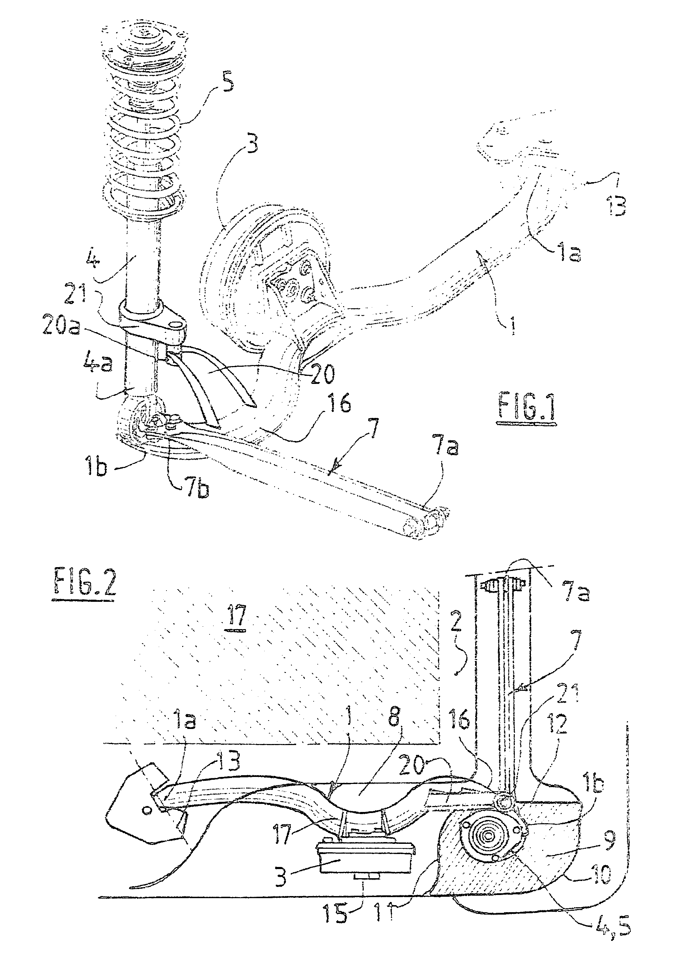

La figure 1 représente une suspension arrière d'un véhicule automobile et les figures 2 à 4 montrent l'implantation de cette suspension à l'arrière du véhicule.

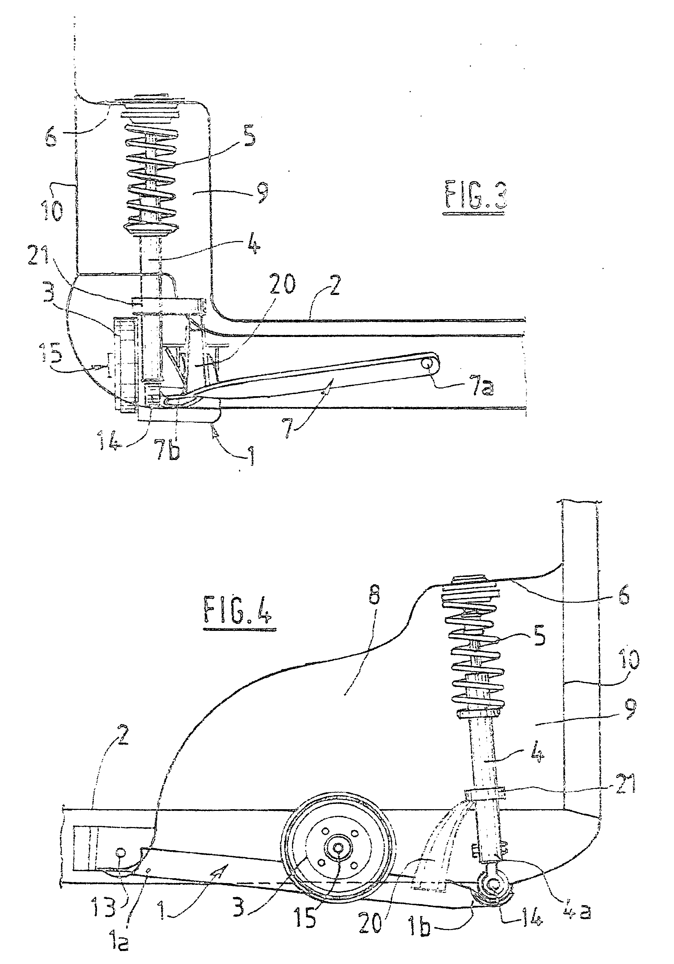

Cette suspension comprend de chaque côté un bras longitudinal 1 dont l'extrémité avant 1a est fixée de façon articulée (voir figures 3 et 4) sous le plancher 2 du véhicule.

Ce bras longitudinal 1 porte un essieu de roue 3 et un ensemble amortisseur 4 et ressort de suspension 5 qui prend appui (voir figures 3 et 4) sous une surface fixe 6 du véhicule.

La suspension comprend d'autre part un bras transversal 7 dont une extrémité 7a est fixée de façon articulée sous le plancher 2 du véhicule (voir figure 3) et dont l'autre extrémité 7b est reliée de façon articulée au bras longitudinal 1.

Par ailleurs, le bras longitudinal 1 comporte un bras fixe 20 faisant saillie vers le haut dont l'extrémité 20a est reliée par une articulation élastique à une biellette 21 dont l'extrémité opposée à cette articulation élastique est reliée à l'amortisseur 4.

La figure 1 montre d'autre part que la biellette 21 s'étend vers l'intérieur dans une direction sensiblement parallèle au bras transversal 7.

D'autre part, le bras fixe 20 a une forme courbée, la concavité de cette courbure étant dirigée vers l'extrémité arrière 1b du bras longitudinal 1.

De plus, la base du bras fixe 20 est située entre l'essieu de roue 3 et l'extrémité arrière 1b du bras longitudinal 1.

En outre, la base du bras 20 est fixée sur une partie coudée du bras longitudinal 1, la concavité de la courbure de cette partie étant dirigée vers l'extérieur.

Cette courbure permet de positionner l'extrémité 20a du bras à une distance de l'amortisseur 4 correspondant à la dimension de la biellette 21.

Des liaisons élastiques existant entre le bras fixe 20, la biellette 21 et le corps de l'amortisseur 4 permettent de filtrer les vibrations.

Conformément à l'invention, l'ensemble amortisseur 4 et ressort de suspension 5 est disposé (voir figures 2 et 4) sensiblement verticalement à l'arrière du passage de roue 8 dans lequel fait saillie l'essieu de roue 3 porté par le bras longitudinal 1, l'extrémité inférieure 4a de l'amortisseur 4 et l'extrémité 7b du bras transversal 7 étant reliées de façon articulée à l'extrémité arrière 1b du bras longitudinal.

Les figures 2 à 4 montrent que l'ensemble amortisseur 4 et ressort de suspension 5 est disposé dans un logement 9 situé dans l'un des deux coins arrière de la carrosserie du véhicule.

Le logement 9 comporte à sa partie supérieure une paroi 6 sur laquelle s'appuie le ressort 5 qui est reliée d'une part au panneau courbe 10 de la carrosserie définissant le coin arrière de celle-ci et d'autre part à deux parois verticales 11, 12 (voir figure 2) définissant avec la paroi courbe 10 un pied droit du véhicule.

La figure 4 montre par ailleurs que le bras longitudinal 1 est incliné vers le bas entre son articulation avant 13 et son articulation arrière 14.

En outre, l'articulation 14 entre l'extrémité arrière du bras longitudinal 1, l'amortisseur 4 et le bras transversal 7 est située en-dessous de l'axe 15 de l'essieu de roue 3.

De plus, l'axe 15 de l'essieu de roue 3 est situé au-dessus du bras longitudinal 1.

La figure 2 montre que la partie arrière du bras longitudinal 1 comporte un coude 16 dirigé vers l'extérieur du véhicule qui a pour effet de décaler l'ensemble amortisseur 4 et ressort 5 vers l'extérieur.

La figure 2 montre de plus que le bras longitudinal 1 comporte une partie coudée 17 située entre son extrémité avant 1a et son extrémité arrière 1b dont la convexité est dirigée vers l'extérieur, cette partie coudée supportant l'essieu de roue.

Les principaux avantages de la suspension arrière que l'on vient de décrire sont les suivants.

Le fait que l'ensemble amortisseur 4 et ressort 5, c'est-à-dire la jambe de force ne soit pas disposée dans le passage de roue, mais déplacée vers l'arrière du véhicule, permet de réaliser un passage de roue sans renfort structurel qui n'encombre pas l'espace disponible à l'intérieur du véhicule.

La disposition de l'ensemble amortisseur 4 et ressort de suspension dans l'un des coins arrière du véhicule, en particulier dans l'un des pieds droits permet :
- d'une part de bénéficier de la faible inertie de ce pied droit pour supporter les efforts exercés par l'ensemble ci-dessus, sans qu'il soit nécessaire de renforcer considérablement la carrosserie à cet endroit et,
- d'autre part d'augmenter la largeur de l'espace de chargement disponible à l'intérieur du véhicule et d'abaisser le niveau du plancher, ce qui permet notamment d'abaisser le seuil de chargement.

En outre, l'abaissement du niveau du plancher est favorisé par l'inclinaison vers le bas du bras longitudinal et par le fait que l'articulation 14 de l'amortisseur au bras longitudinal soit située à l'arrière de ce dernier.

De plus, le fait que l'articulation 14 de l'amortisseur au bras longitudinal soit située à l'arrière de ce dernier, c'est-à-dire au-delà de l'essieu de roue 3 permet l'utilisation d'un ressort 5 de dimension réduite ce qui permet de le loger dans un logement de dimension réduite qui n'encombre pas l'espace intérieur du véhicule.

La figure 2 montre une zone hachurée 17 qui représente l'important espace disponible sous le plancher 2 du véhicule qui permet de loger la roue de secours et d'autres dispositifs tels que le silencieux et/ou le pot de détente de la ligne d'échappement.

## Revendications

1. Suspension arrière destinée à un véhicule automobile, comprenant de chaque côté un bras longitudinal (1) portant un essieu de roue (3) et un ensemble amortisseur (4) et ressort de suspension (5) destiné à prendre appui sous une surface fixe (6) du véhicule, un bras transversal (7) dont une extrémité est destinée à être fixée de façon articulée sous le plancher (2) du véhicule et dont l'autre extrémité est reliée de façon articulée au bras longitudinal(1), **caractérisée en ce que** :
• l'extrémité avant du bras longitudinal (1) est fixée de façon articulée sous le plancher (2) du véhicule,
• l'ensemble amortisseur (4) et ressort de suspension (5) est disposé sensiblement verticalement à l'arrière du passage de roue (8) dans lequel fait saillie l'essieu de roue (3) porté par le bras longitudinal (1),
• le bras longitudinal (1) est incliné vers le bas entre son articulation avant et son articulation arrière,
• l'extrémité inférieure de l'amortisseur (4) et ladite autre extrémité du bras transversal (7) sont reliées de façon articulée à l'extrémité arrière du bras longitudinal (1).

2. Suspension arrière selon la revendication 1, **caractérisée en ce que** l'articulation entre l'extrémité arrière du bras longitudinal (1), l'amortisseur (4) et le bras transversal (7) est située en dessous de l'axe de l'essieu de roue (3).

3. Suspension arrière selon l'une des revendications 1 à 2, **caractérisée en ce que** l'axe de l'essieu de roue (3) est situé au-dessus du bras longitudinal (1).

4. Suspension arrière selon l'une des revendications 1 à 3, **caractérisée en ce que** la partie arrière du bras longitudinal (1) comporte un coude (16) dirigé vers l'extérieur du véhicule.

5. Suspension arrière selon l'une des revendications 1 à 4, **caractérisée en ce que** le bras longitudinal (1) comporte une partie coudée (17) située entre son extrémité avant et son extrémité arrière dont la convexité est dirigée vers l'extérieur, cette partie coudée (17) supportant l'essieu de roue (3).

6. Véhicule automobile comprenant une suspension arrière selon l'une des revendications 1 à 5.

7. Véhicule automobile selon la revendication 6, **caractérisé en ce que** l'ensemble amortisseur (4) et ressort de suspension (5) est disposé dans un logement (9) situé dans l'un des deux coins arrière de la carrosserie du véhicule.

8. Véhicule automobile selon la revendication 7, **caractérisé en ce que** ledit logement (9) comporte à sa partie supérieure une paroi (6) qui est reliée d'une part au panneau (10) de la carrosserie définissant ledit coin arrière et d'autre part à deux parois verticales (11, 12) reliées au panneau (10).

## Patentansprüche

1. Hinterradaufhängung für ein Kraftfahrzeug, die auf jeder Seite einen Längsarm (1), der eine Radachse (3) und eine Einheit aus Dämpfer (4) und Aufhängefeder (5) trägt, die dazu bestimmt ist, unter einer ortsfesten Fläche (6) des Fahrzeugs aufzuliegen, und einen Querarm (7) enthält, von dem ein Ende dazu bestimmt ist, gelenkig unter dem Boden (2) des Fahrzeugs befestigt zu werden, und dessen anderes Ende gelenkig mit dem Längsarm (1) verbunden ist, **dadurch gekennzeichnet, dass**:
• das vordere Ende des Längsarms (1) gelenkig unter dem Boden (2) des Fahrzeugs befestigt ist,
• die Einheit aus Dämpfer (4) und Aufhängefeder (5) im Wesentlichen senkrecht an der Rückseite des Radkastens (8) angeordnet ist, in den die vom Längsarm (1) getragene Radachse (3) vorsteht,
• der Längsarm (1) zwischen seinem vorderen Gelenk und seinem hinteren Gelenk nach unten geneigt ist,
• das untere Ende des Dämpfers (4) und das andere Ende des Querarms (7) gelenkig mit dem hinteren Ende des Längsarms (1) verbunden sind.

2. Hinterradaufhängung nach Anspruch 1, **dadurch gekennzeichnet, dass** das Gelenk zwischen dem hinteren Ende des Längsarms (1), dem Dämpfer (4) und dem Querarm (7) sich unter der Achse der Radachse (3) befindet.

3. Hinterradaufhängung nach einem der Ansprüche 1 bis 2, **dadurch gekennzeichnet, dass** die Achse der Radachse (3) sich über dem Längsarm (1) befindet.

4. Hinterradaufhängung nach einem der Ansprüche 1 bis 3, **dadurch gekennzeichnet, dass** der hintere Teil des Längsarms (1) ein Kniestück (16) aufweist, das zur Außenseite des Fahrzeugs gerichtet ist.

5. Hinterradaufhängung nach einem der Ansprüche 1 bis 4, **dadurch gekennzeichnet, dass** der Längsarm (1) einen knieförmigen Teil (17) aufweist, der sich zwischen seinem vorderen Ende und seinem hinteren Ende befindet, dessen Konvexität nach außen gerichtet ist, wobei dieser knieförmige Teil (17) die Radachse (3) trägt.

6. Kraftfahrzeug, das eine Hinterradaufhängung nach einem der Ansprüche 1 bis 5 enthält.

7. Kraftfahrzeug nach Anspruch 6, **dadurch gekennzeichnet, dass** die Einheit aus Dämpfer (4) und Aufhängefeder (5) in einer Aufnahme (9) angeordnet ist, die sich in einer der zwei hinteren Ecken des Aufbaus des Fahrzeugs befindet.

8. Kraftfahrzeug nach Anspruch 7, **dadurch gekennzeichnet, dass** die Aufnahme (9) in ihrem oberen Bereich eine Wand (6) aufweist, die einerseits mit der die hintere Ecke definierenden Aufbauverkleidung (10) und andererseits mit zwei mit der Verkleidung (10) verbundenen senkrechten Wänden (11, 12) verbunden ist.

## Claims

1. Rear suspension intended for a motor vehicle, comprising on each side a longitudinal arm (1) carrying a wheel axle (3) and a damper (4)/suspension spring (5) assembly intended to bear below a fixed surface (6) of the vehicle, and a transverse arm (7) of which one end is intended to be fixed in an articulated manner below the floor (2) of the vehicle and of which the other end is connected in an articulated manner to the longitudinal arm (1), **characterized in that**:
• the front end of the longitudinal arm (1) is fixed in an articulated manner below the floor (2) of the vehicle,
• the damper (4)/suspension spring (5) assembly is arranged substantially vertically at the rear of the wheel housing (8) into which there projects the wheel axle (3) carried by the longitudinal arm (1),
• the longitudinal arm (1) is inclined downwards between its front articulation and its rear articulation,
• the lower end of the damper (4) and the said other end of the transverse arm (7) are connected in an articulated manner to the rear end of the longitudinal arm (1).

2. Rear suspension according to Claim 1, **characterized in that** the articulation between the rear end of the longitudinal arm (1), the damper (4) and the transverse arm (7) is situated below the axis of the wheel axle (3).

3. Rear suspension according to either of Claims 1 and 2, **characterized in that** the axis of the wheel axle (3) is situated above the longitudinal arm (1).

4. Rear suspension according to one of Claims 1 to 3, **characterized in that** the rear part of the longitudinal arm (1) comprises an elbow (16) directed towards the outside of the vehicle.

5. Rear suspension according to one of Claims 1 to 4, **characterized in that** the longitudinal arm (1) comprises an elbowed part (17) situated between its front end and its rear end, the convexity of which is directed towards the outside, this elbowed part (17) supporting the wheel axle (3).

6. Motor vehicle comprising a rear suspension according to one of Claims 1 to 5.

7. Motor vehicle according to Claim 6, **characterized in that** the damper (4)/suspension spring (5) assembly is arranged in a housing (9) situated in one of the two rear corners of the body of the vehicle.

8. Motor vehicle according to Claim 7, **characterized in that** the said housing (9) comprises at its upper part a wall (6) which is connected on the one hand to the panel (10) of the body defining the said rear corner and on the other hand to two vertical walls (11, 12) connected to the panel (10).
